# EUROPÄISCHE PATENTSCHRIFT

(11) **EP 2 042 884 B1**
(45) Veröffentlichungstag und Bekanntmachung des Hinweises auf die Patenterteilung: **22.06.2011**
(21) Anmeldenummer: 08105149.2
(22) Anmeldetag: 27.08.2008
(51) Int. Cl.: G01S 19/17

(54) **Verfahren und System zur Modifikation eines Notrufssystems**
Method and system for modifying an emergency call system
Procédé et système destinés à la modification d'un système d'appel d'urgence

(30) Priorität: 28.09.2007 DE 102007046768
(43) Veröffentlichungstag der Anmeldung: 01.04.2009
(73) Patentinhaber: ROBERT BOSCH GMBH, 70442 Stuttgart (DE)
(72) Erfinder: Siegle, Gert, 31139, Hildesheim (DE)

(56) Entgegenhaltungen:
- DE-A1-102005 048 061
- US-A- 6 151 551
- US-A1- 2008 242 261
- R. DELLAGO, F. LUONGO, M. MARINELLI, J. HAHN, R.LUCAS: "GALILEOSAT: System Architecture and design status 8-11 May 2001 - Sevilla, Spain" GNSS 2001 INTERNATIONAL SYMPOSIUM, 8. Mai 2001 (2001-05-08), XP007910582
- G. SALGADO, Y. CAPELLE, J.P. PROVENZANO, G. JARTHON, M. LUGERT: "GALILEO Mission Segment Description" GNSS 2003 THE EUROPEAN NAVIGATION CONFERENCE - 22-25 APRIL 2003 - GRAZ, AUSTRIA, 22. April 2003 (2003-04-22), XP007910583

## Beschreibung

### Technisches Gebiet

Die Erfindung betrifft ein Steuerverfahren zum Steuern einer Aussendung eines Notrufs von einem Kraftfahrzeug an eine Notrufzentrale, wobei das Kraftfahrzeug mit einer Satellitennavigations- oder einer Satellitenortungseinrichtung zum Empfang von Satellitensignalen zur Ortungs- bzw. Positionsermittlung ausgestattet ist, und wobei die satellitengestützte Navigationseinrichtung oder Satellitenortungseinrichtung zusätzlich auch von einem Satellitensystem ausgesendete Zuverlässigkeitssignale empfängt, welche die Zuverlässigkeit, Vollständigkeit und/oder Richtigkeit der von den Satelliten übermittelten Ortungsinformationen oder die Abweichung davon anzeigen und eine Vorrichtung hierfür.

### Stand der Technik

Insbesondere bei Kraftfahrzeugen ist es wünschenswert, wenn bei gewissen Ereignissen, wie beispielsweise bei schweren Unfällen ein Notruf automatisch gesendet wird, so dass Rettungskräfte frühzeitig alarmiert werden und Rettungsmaßnahmen ohne große Zeitverzögerung eingeleitet werden können. Dies ist insbesondere bei Verkehrsunfällen bei Nacht oder in abgelegenen Regionen besonders vorteilhaft, da ein Unfall unter solchen Umständen von unbeteiligten Verkehrsteilnehmern nicht immer unmittelbar beobachtet oder bemerkt werden und entsprechend ein unmittelbarer Notruf von Dritten daher auch nicht immer veranlasst werden kann.

Daher ist ein automatischer Notruf eine Maßnahme zur Verbesserung der Rettungsmaßnahmen. Bei einem Aussenden eines Notrufs ist auch die Übermittlung der Positionsangabe des Unfalls von entscheidender Bedeutung, da ohne konkrete Positionsangabe keine zielgerichtete Rettungsmaßnahme eingeleitet werden kann. Nun liegen in heutigen Fahrzeugen oft Navigations- oder Ortungssysteme vor, welche eine Ortungs- oder Positionsinformation empfangen oder ermitteln, so dass grundsätzlich mit dem Notruf auch eine aktuelle Positionsinformation gesendet werden könnte. Allerdings sind solche Navigationssysteme nicht immer in Betrieb bzw. es gibt Ausfallsituationen, in welchen das Ortungs- oder Positionssignal nicht oder nur ungenau vorliegt oder die Ortung nicht mit hinreichender Genauigkeit, wie beispielsweise besser als 50 m, durchgeführt werden kann. In solchen Situationen führt eine Aussendung eines Notrufs nicht zu dem gewünschten Erfolg, da die Ortungsinformation fehlt oder unzureichend ist.

Die DE 10 2005 048 061 A1 zeigt eine Navigationseinrichtung oder eine Satellitenortungseinrichtung für ein Kraftfahrzeug zur Ortungs- bzw. Positionsermittlung, wobei die satellitengestützte Navigationseinrichtung oder Satellitenortungseinrichtung zusätzlich auch von einem Satellitensystem ausgesendete Zuverlässigkeitssignale empfängt, welche die Zuverlässigkeit, Vollständigkeit und/oder Richtigkeit der von den Satelliten übermittelten Ortungsinformationen oder die Abweichung davon anzeigen. Das Kraftfahrzeug ist mit einer Sendevorrichtung ausgeführt, mit der eine Aussendung eines Notrufsignals in Abhängigkeit einer Positionsinformation vorgesehen ist. Das Signal an die Notrufzentrale weist jedoch lediglich die Positionsinformation über die Position des Fahrzeugs auf, die als Navigationssignale empfangen wurden. Ist die genaue Positionsermittlung nicht gegeben, so kann ein fehlerhaftes Signal ausgesandt werden und beispielsweise eine Rettungsaktion von der Notrufzentrale eingeleitet werden, die jedoch zu einem fehlerhaften Ort gelangt.

Die US 6, 151, 551 schlägt ein Notrufsystem für ein Kraftfahrzeug mit einer Ortungs- bzw. Positionsermittlung vor, wobei vorgesehen ist, einen Verlust an Genauigkeit der Positionsermittlung anzuzeigen. Dazu ist offenbart, eine Koppelnavigation zwischen einem GPS System und einem Dead Reckoning Subsystem (DR) zu verwenden, wobei bei eine Inkonsistenz zwischen den ermittelten Positionen angezeigt wird. Eine satellitengestützte Navigationseinrichtung oder Satellitenortungseinrichtung ist jedoch nicht vorgesehen, welche zusätzlich auch von einem Satellitensystem ausgesendete Zuverlässigkeitssignale empfängt, welche die Zuverlässigkeit, Vollständigkeit und/oder Richtigkeit der von den Satelliten übermittelten Ortungsinformationen oder die Abweichung davon anzeigen. Das Dead Reckoning Subsystem (DR) beschreibt eine Koppelnavigation, die beispielsweise auf der Erfassung und Auswertung von Fahrzeugbewegungsdaten wie Geschwindigkeit, Lenkeinschläge etc. basieren, sodass diese Daten mit den Satellitennavigationsdaten gekoppelt werden. Wird ein Notrufsignal ausgesendet, so kann die Zuverlässigkeit der Richtigkeit der Positionsangabe des Kraftfahrzeugs im Notruf erhöht werden. Nachteilhafterweise verfügen nur wenige Kraftfahrzeuge über derartige Dead Reckoning (DR) Subsysteme.

### Darstellung der Erfindung: Aufgabe, Lösung, Vorteile

Es ist die Aufgabe der vorliegenden Erfindung, ein Verfahren zum Steuern des Inhalts einer Aussendung oder zur Initiierung eines Notrufs insbesondere von einem Kraftfahrzeug mit einer satellitengestützten Navigationseinrichtung oder einer Satellitenortungseinrichtung zum Empfang von Satellitensignalen zur Ortungs- bzw. Positionsermittlung zu schaffen und dafür eine Vorrichtung zu schaffen, mittels welcher die oben geschilderten Probleme für den Fall des Ausfalls oder der Verschlechterung der Genauigkeit der Satellitenortung vermindert oder beseitigt werden können.

Erfindungsgemäß wird die Aufgabe bezüglich des Steuerverfahrens gelöst durch eine Ergänzung im Inhalt der Notruf-Aussendung nach Initiierung eines Notrufs insbesondere aus einem Kraftfahrzeug, das mit einer satellitengestützten Navigationseinrichtung oder einer Satellitenortungseinrichtung zum Empfang von Satellitensignalen zur Ortungs- bzw. Positionsermittlung ausgestattet ist, wobei die eingebaute satellitengestützte Navigationseinrichtung oder Satellitenortungseinrichtung zusätzlich zu dem Satelliten-Ortungssignal ein von den Satelliten mitgesendetes Zuverlässigkeitssignal (SoL-Signal = "Safety-of-Life-Signal") empfängt und auswertet, welches Hinweise gibt für die Zuverlässigkeit, Richtigkeit und Vollständigkeit des ausgesandten Ortungssignal. Sollte diese Zuverlässigkeit, Richtigkeit und/oder Vollständigkeit nicht gegeben sein, wird dieses Signal entsprechend der Auslegung des Satellitensystems modifiziert ausgesandt, so dass der auswertende Empfänger im Fahrzeug die Information über die ggf. dann unzureichende Zuverlässigkeit und/oder Richtigkeit mit dem Ortungssignal ermittelten Position erhält.

Erfindungsgemäß wird dann im Falle eines Notrufs dem Notrufsignal durch das Fahrzeuggerät eine entsprechende Zusatzinformation (Kennung) hinzugefügt, die auf die mögliche Unzuverlässigkeit der übermittelten Positionsangabe hinweist.

Es ist vorteilhaft, wenn im Falle eines die einwandfreie Funktion zeigenden SoL-Signals die Kennung so mitgesendet wird, dass die Richtigkeit der durch die Satelliten übermittelten Ortsinformation damit bestätigt wird. In diesem Fall ist die Kennung für die Unzuverlässigkeit nur eine Bitänderung des die Richtigkeit anzeigenden Signals.

Es ist auch erfindungsgemäß, wenn die Notrufzentrale selbst die Satelliteninformationen laufend registriert und auswertet, so dass bei Vorliegen eines Hinweises auf eine Verringerung der Zuverlässigkeit, Richtigkeit und/oder Vollständigkeit dort schon erkannt wird, dass eingehende Notrufmeldungen möglicher Weise fehlerhaft sind, solange bis das SoL-Signal wieder einwandfreien Betrieb zeigt.

Dies hilft bei der Beurteilung, ob die vom verunfallten Fahrzeug übermittelte Position korrekt sein kann, doch ist diese Beurteilung nicht immer eindeutig, da Fahrzeug und Notrufzentrale ggf. unterschiedliche Satelliten auswerten.

Es ist bekannt und unter dem Namen eCall durch die Europäische Kommission auch definiert, ein solches Notsignal mit Vorteil dann auszulösen, wenn eine signifikante Unfallsituation automatisch erkannt wird, wie beispielsweise bei einem Auslösen eines Airbags, beim Ansprechen eines so genannten Crash-Sensors, welcher beispielsweise hohe Beschleunigungen wie bei einem Unfall detektiert, etc.

Ebenso ist bei eCall vorgesehen, die Aussendung des Notrufs mittels einer Kommunikationseinrichtung durchzuführen, die beispielsweise auf einem der folgenden Verfahren beruht: GSM, GPRS, UMTS, WLAN etc.

Auch ist es zweckmäßig, wenn neben der die ggf. mangelnde Richtigkeit der Ortung anzeigenden Kennung fahrzeugspezifische Daten mit dem Notruf gesendet werden. Das können etwa sein Fahrzeugidentifikationsdaten, letzte sichere Ortungs- bzw. Positionsdaten und/oder Zeitpunkt der letzten sicheren Ortungs- oder Positionsdaten u.a.m.

Erfindungsgemäß wird die Aufgabe bezüglich der Kfz-Vorrichtung gelöst durch eine satellitengestützte Navigationseinrichtung- oder eine Satellitenortungseinrichtung, deren Position im Falle eines Notrufs an eine Notrufzentrale übermittelt wird, wobei zum Nachweis der Richtigkeit der mit Hilfe der Satellitenortung ermittelten Position ein vom Satellitensystem mitgesandtes Zusatzsignal (SoL) entweder vom Fahrzeuggeräte und/oder auch von der Notrufzentrale mit detektiert und ausgewertet wird. Im ersten Fall kann das Fahrzeuggerät mit Vorteil eine die Angabe (Kennung) über die im SoL-Signal ausgedrückte aktuelle Zuverlässigkeit der Satellitenortung mit dem Notrufsignal zur Notrufzentrale senden.

Dabei ist es zweckmäßig, wenn die Satellitennavigations- oder Satellitenortungseinrichtung SoL-Signale im Frequenzbereich 1164 bis 1215 MHz und/oder im Frequenzbereich von 1559 bis 1610 MHz empfängt wie sie im Galileo-System vorgesehen sind.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigt:

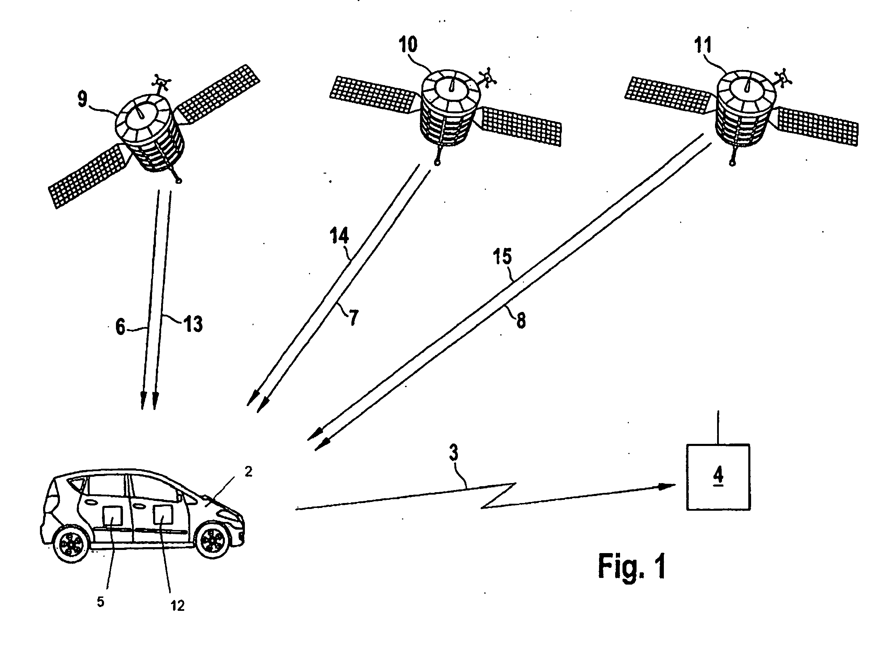

- Fig. 1: ein Diagramm zur Erläuterung des erfindungsgemäßen Verfahrens.

### Bevorzugte Ausführung der Erfindung

Die Figur 1 zeigt schematisch ein Diagramm 1, in dem ein verunfalltes Fahrzeug 2 dargestellt ist. Ein Notrufsignal 3 soll u.a. möglichst die Position des verunfallten Fahrzeuge zu einer oder ggf. auch mehrere Unfallzentralen und Polizeidienstellen 4 mit übertragen, wozu im Fahrzeug eine satellitengestützte Navigations- oder eine Satellitenortungseinrichtung 5 vorhanden ist, welche zumindest Ortungssignale 6, 7, 8 von zumindest drei Navigationssatelliten 9, 10, 11 empfängt und auswertet. Diese satellitengestützte Navigationseinrichtung oder die Satellitenortungseinrichtung 4 bestimmt aufgrund der Ortungssignale 6, 7, 8 und ggf. weiterer Ortungssignale von weiteren Satelliten automatisch und laufend die Position des Fahrzeugs 2, so dass aufgrund der Satellitenortung die Position des Fahrzeugs zumindest im Wesentlichen ständig eindeutig ermittelbar ist. Gegebenenfalls verfügt das Navigationssystem 5 über eine zusätzliche Kartenstützung, so dass neben der Satellitennavigation das Navigationssystem 5 die Position des Fahrzeugs auch durch die Kartennavigation mit Hilfe der mitgeführten, im Gerät oder auf Datenträger gespeicherten digitalen Karte noch genauer bestimmen kann. Darüber hinaus hat das Fahrzeug eine Funkeinrichtung 12, über die eine Nachricht drahtlos an eine Notrufzentrale abgesetzt werden kann und ggf. auch eine Zweiweg-Kommunikation abgewickelt werden kann.

Gemäß der Erfindung empfängt und wertet die Navigationseinheit 5 nicht nur die herkömmlichen Ortungssignale 6,7,8 aus, sondern auch weitere Signale 13,14,15, welche die Zuverlässigkeit der Satellitennavigation signalisieren. Dabei repräsentieren diese Signale 13,14,15 die ordnungsgemäße Funktion der gesendeten Ortungssignale des oder der Satelliten - eine der Voraussetzungen für eine ebenfalls ordnungsgemäße und richtig bestimmte Position des Fahrzeugs 2.

Zur Aussendung eines Notrufsignals selbst kann das Fahrzeug eine gesonderte Steuereinheit 12 zur Aussendung aufweisen oder auf die Kommunikationseinrichtungen des Fahrzeuges zurückgreifen, die beispielsweise auch in die satellitengestützte Navigations- oder eine Satellitenortungseinrichtung 5 integriert sein kann.

Fällt beispielsweise das Ortungssignal eines Satelliten 9 aus, so signalisiert dies ein modifiziertes Zusatz-Signal 13, mit dessen Hilfe (und Extremfall bei dessen Ausfall) das Fahrzeug erkennen kann, dass das Satelliten-Ortungssignal dieses Satelliten nicht mehr zur Ermittlung von Positionsdaten oder nur eingeschränkt verwendet werden kann. Sinkt die Zahl auswertbarer Ortungssignale von verschiedenen Satelliten des Satelliten-Ortungssystems auf unter drei, kann eine hinreichend genaue Ortung nicht mehr gewährleistet werden. In diesem Falle wird die satellitengestützte Navigations- oder Satellitenortungseinrichtung dem Notruf 3 eine Zusatzinformation, wie eine Kennung, hinzufügen oder ein schon eingefügtes Verifikationssignal so abändern, dass der Zentralstation 4 angezeigt wird, dass die übermittelte Ortungsinformation gegebenenfalls fehlerhaft ist.

Der Notruf selbst kann künftig standardisiert werden, wobei mit Vorteil neben der Ortung auch Daten zur Fahrzeugidentifikation und ggf. die Zeit und Position der letzten einwandfreien Positionsbestimmung gesendet werden.

Da die die Zuverlässigkeit, Vollständigkeit und/oder Richtigkeit der Ortungssignale 6,7,8 charakterisierenden Signale 13,14,15 zusammen mit den Ortungssignalen 6,7,8 übertragen werden, ist es vorteilhaft, wenn die elektronischen Auswertungen der SoL- und der Ortungssignale in einer Geräteeinheit zusammengefasst sind.

Beispielsweise ist das satellitengestützte Navigationssystem ein Navigationssystem, das auf die Signale des Galileo-Systems zurückgreift, welches neben Positions- oder Ortungssignalen 6,7,8 auch so genannte SoL-Signale ("Safety- of- Life- Signale") als Integritätssignale 13,14,15 erzeugt und sendet. Diese SoL-Signale sind im Sendespektrum des Galileo-Satellitensystems vorgesehen.

Dazu ist der Empfänger insbesondere des Navigationssystems 5 mit Empfangseinrichtungen versehen, welche die Signale 6,7,8 und 13,14,15 empfangen und auswerten können. Dies erfolgt beispielsweise bei einem Empfang von Signalen des Galileo-Systems im Frequenzbereich von 1164 bis 1215 MHz und im Frequenzbereich von 1559 bis 1610 MHz.

Für die Einweg- oder Zweiweg-Kommunikationsmittel 12 des Fahrzeugs 2 zur Zentrale 4 können vorteilhaft GSM-, GPRS-, UMTS-, oder WLAN-Verfahren oder -Technologien oder andere eingesetzt werden.

## Patentansprüche

1. Steuerverfahren zum Steuern einer Aussendung eines Notrufs (3) von einem Kraftfahrzeug (2) an eine Notrufzentrale (4), wobei das Kraftfahrzeug (2) mit einer satellitengestützten Navigationseinrichtung oder einer Satellitenortungseinrichtung (5) zum Empfang von Satellitensignalen (6,7,8) zur Ortungs- bzw. Positionsermittlung ausgestattet ist, und wobei die satellitengestützte Navigationseinrichtung oder Satellitenortungseinrichtung (5) zusätzlich auch von einem Satellitensystem ausgesendete Zuverlässigkeitssignale (13,14,15) empfängt, welche die Zuverlässigkeit, Vollständigkeit und/oder Richtigkeit der von den Satelliten (9, 10, 11) übermittelten Ortungsinformationen oder die Abweichung davon anzeigen,
**dadurch gekennzeichnet,**
**dass** im Falle, dass weniger als drei Satelliten (9, 10, 11) einwandfreie Ortungssignale zeigen, die Ortung nicht mehr sicher und fehlerfrei möglich ist, so dass eine Positionsangabe im Notruf (3) durch eine entsprechende Kennung im Datentelegramm als unzuverlässig gekennzeichnet wird.

2. Steuerverfahren nach Anspruch 1, **dadurch gekennzeichnet, dass** die Notrufzentrale (4) die Zuverlässigkeitssignale (13, 14, 15) selbst auswertet und danach die Richtigkeit eingehender Positionsmeldungen von Fahrzeug-Notrufen beurteilt.

3. Steuerverfahren nach Anspruch 1 oder 2, **dadurch gekennzeichnet, dass** die Aussendung des Notrufs (3) automatisch oder manuell initiiert wird.

4. Steuerverfahren nach Anspruch 1, **dadurch gekennzeichnet, dass** die Aussendung des Notrufs (3) bei Erkennen einer signifikanten Situation automatisch initiiert wird, wie beispielsweise bei einem Auslösen eines Airbags etc.

5. Steuerverfahren nach einem der vorhergehenden Ansprüche, **dadurch gekennzeichnet, dass** die Aussendung des Notrufs (3) mittels einer Kommunikationseinrichtung erfolgt, die beispielsweise auf einem der folgenden Verfahren beruht: GSM, GPRS, UMTS, WLAN etc.

6. Steuerverfahren nach einem der vorhergehenden Ansprüche, **dadurch gekennzeichnet, dass** neben einer eine mangelnde Integrität repräsentierende Kennung im Notruf-Signal, wie mangelnde Richtigkeit, Vollständigkeit und/oder Zuverlässigkeit, weitere fahrzeugspezifische Daten oder Signal gesendet werden.

7. Steuerverfahren nach einem der vorhergehenden Ansprüche, **dadurch gekennzeichnet, dass** die weiteren fahrzeugspezifische Daten oder Signal sind: Fahrzeugidentifikationsdaten und/oder letzte sichere Ortungs- bzw. Positionsdaten und/oder Zeitpunkt der letzten sicheren Ortungs- oder Positionsdaten.

8. Satellitengestützte Navigations- oder Satellitenortungseinrichtung zur Aussendung eines Notrufs (3) von einem Kraftfahrzeug (2) an eine Notrufzentrale (4), wobei das Kraftfahrzeug (2) mit einer Einrichtung zum Empfang und zum Auswerten von Satellitensignalen (6,7,8) zur Ortungs- bzw. Positionsermittlung ausgestattet ist und mit der satellitengestützten Navigations- oder Satellitenortungseinrichtung (5) zudem Zuverlässigkeitssignale (13,14,15) empfangbar sind, die die Integrität der satellitengestützten Navigation oder der Satellitenortung repräsentieren,
**dadurch gekennzeichnet, dass**
bei vorliegen einer mangelnden Integrität eine diese mangelnde Integrität repräsentierende Information innerhalb des Notrufs (3) ausgebbar ist, wobei im Falle, dass weniger als drei Satelliten (9, 10, 11) einwandfreie Ortungssignale zeigen, die Ortung nicht mehr sicher und fehlerfrei möglich ist, so dass eine Positionsangabe im Notruf (3) durch eine entsprechende Kennung im Datentelegramm als unzuverlässig gekennzeichnet wird.

## Claims

1. Control method for controlling the transmission of an emergency call (3) from a motor vehicle (2) to an emergency call centre (4), wherein the motor vehicle (2) is equipped with a satellite-supported navigation device or a satellite locating device (5) for receiving satellite signals (6, 7, 8) for determining locations or positions, and wherein the satellite-supported navigation device or satellite locating device (5) additionally also receives reliability signals (13, 14, 15) which are emitted by a satellite system and which indicate the reliability, completeness and/or correctness of the locating information transmitted by the satellites (9, 10, 11), or the deviation from said information,
**characterized**
**in that** if fewer than three satellites (9, 10, 11) exhibit satisfactory locating signals, the locating process is no longer possible in a reliable and fault-free fashion, with the result that a position indication in the emergency call (3) is characterized as unreliable by a corresponding identifier in the data telegram.

2. Control method according to Claim 1, **characterized in that** the emergency call centre (4) itself evaluates the reliability signals (13, 14, 15) and then assesses the correctness of incoming position messages from vehicle emergency calls.

3. Control method according to Claim 1 or 2, **characterized in that** the transmission of the emergency call (3) is initiated automatically or manually.

4. Control method according to Claim 1, **characterized in that** the transmission of the emergency call (3) is initiated automatically when a significant situation is detected, such as for example when an airbag is triggered etc.

5. Control method according to one of the preceding claims, **characterized in that** the transmission of the emergency call (3) is carried out by means of a communication device which is based, for example, on one of the following methods: GSM, GPRS, UMTS, WLAN etc.

6. Control method according to one of the preceding claims, **characterized in that** in addition to a identifier which represents a lack of integrity in the emergency call signal, such as lack of correctness, completeness and/or reliability, further vehicle-specific data or signals are transmitted.

7. Control method according to one of the preceding claims, **characterized in that** the further vehicle-specific data or signals are: vehicle identification data and/or last reliable locating data or position data and/or time of the last reliable locating data or position data.

8. Satellite-supported navigation device or satellite locating device for transmitting an emergency call (3) from a motor vehicle (2) to an emergency call centre (4), wherein the motor vehicle (2) is equipped with a device for receiving and evaluating satellite signals (6, 7, 8) for determining locations or positions, and with satellite-supported navigation device or satellite locating device (5) it is additionally possible to receive reliability signals (13, 14, 15) which represent the integrity of the satellite-supported navigation or of the satellite locating process,
**characterized in that**
when a lack of integrity is present, an information item representing this lack of integrity can be output within the emergency call (3), wherein if fewer than three satellites (9, 10, 11) exhibit satisfactory locating signals, the locating process is no longer possible in a reliable and fault-free fashion, with the result that a position indication in the emergency call (3) is characterized as unreliable by a corresponding identifier in the data telegram.

## Revendications

1. Procédé de contrôle qui commande l'émission d'un appel d'urgence (3) depuis un véhicule automobile (2) vers une centrale (4) d'appels d'urgence,
le véhicule automobile (2) étant équipé d'un dispositif de navigation assisté par satellite ou d'un dispositif (5) de localisation par satellite destiné à recevoir des signaux (6, 7, 8) de satellite pour déterminer sa localisation ou sa position,
le dispositif de navigation assisté par satellite ou le dispositif (5) de localisation par satellite recevant de plus également des signaux de fiabilité (13, 14, 15) émis par un système de satellite et indiquant si les informations de localisation transmises par les satellites (9, 10, 11) sont fiables, completes et/ou correctes ou s'en écartent,
**caractérisé en ce que**
au cas où moins de trois satellites (9, 10, 11) indiquent que les signaux de localisation ne posent pas de problème, la localisation n'est plus sûre et peut être erronée, de sorte qu'une indication de position est caractérisée comme non fiable par une caractérisation appropriée dans le télégramme de données du message d'urgence (3).

2. Procédé de contrôle selon la revendication 1, **caractérisé en ce que** la centrale (4) d'appels d'urgence évalue elle-même les signaux de fiabilité (13, 14, 15) et ensuite évalue si les messages de position des appels d'urgence provenant des véhicules sont corrects.

3. Procédé de contrôle selon la revendication 1 ou 2, **caractérisé en ce que** l'émission de l'appel d'urgence (3) est lancée automatiquement ou manuellement.

4. Procédé de contrôle selon la revendication 1, **caractérisé en ce que** l'émission de l'appel d'urgence (3) est lancée automatiquement lorsqu'une situation significative est détectée, par exemple le déclenchement d'un coussin gonflable de sécurité, etc.

5. Procédé de contrôle selon l'une des revendications précédentes, **caractérisé en ce que** l'émission de l'appel d'urgence (3) s'effectue au moyen d'un dispositif de communication basé par exemple sur l'un des procédés suivants : GSM, GPRS, UMTS, WLAN, etc.

6. Procédé de contrôle selon l'une des revendications précédentes, **caractérisé en ce que** d'autres données ou signaux spécifiques au véhicule sont envoyés en plus d'une caractérisation qui représente une absence d'intégrité du signal d'appel d'urgence, par exemple que le signal n'est pas correct, complet et/ou fiable.

7. Procédé de contrôle selon l'une des revendications précédentes, **caractérisé en ce que** les autres données ou signaux spécifiques au véhicule sont des données d'identification du véhicule et/ou les dernières données certaines de localisation ou de position et/ou l'instant des dernières données certaines de localisation ou de position.

8. Dispositif de navigation ou de localisation assistées par satellite, destiné à émettre un message d'urgence (3) depuis un véhicule automobile (2) vers une centrale (4) d'appels d'urgence, le véhicule (2) étant équipé d'un dispositif de réception et d'évaluation de signaux (6, 7, 8) de satellites en vue de la détermination de sa localisation ou de sa position et des signaux de fiabilité (13, 14, 15) qui représentent l'intégrité de la navigation ou de la localisation assistées par satellite pouvant être reçus par le dispositif (5) de navigation ou de localisation assistées par satellite,
**caractérisé en ce que**
en cas d'absence d'intégrité, une information qui représente cette absence d'intégrité peut être délivrée à l'intérieur de l'appel d'urgence (3) et **en ce qu'**au cas où moins de trois satellites (9, 10, 11) indiquent que les signaux de localisation ne posent pas de problème, la localisation n'est plus sûre et peut être erronée, de sorte qu'une indication de position reprise dans le message d'urgence (3) est caractérisée comme non fiable par une caractérisation appropriée dans le télégramme de données.
